# FASCICULE DE BREVET EUROPEEN

(11) **EP 2 423 720 B1**
(45) Date de publication et mention de la délivrance du brevet: **10.07.2013**
(21) Numéro de dépôt: 10174016.5
(22) Date de dépôt: 25.08.2010
(51) Int. Cl.: G02B 6/293

(54) **Filtre optique accordable en longueur d'onde et élément réflecteur**
Wellenlängen-abstimmbares optisches Filter und reflektierendes Bauteil
Wavelength-tuneable optical filter and reflective element

(43) Date de publication de la demande: 29.02.2012
(73) Titulaire: Sercalo Microtechnology Ltd., 9494 Schaan (LI)
(72) Inventeur: Marxer, Cornel, 2000, Neuchâtel (CH)
(74) Mandataire: Hasler, Erich

(56) Documents cités:
- FR-A1- 2 849 919
- US-A1- 2003 007 721
- US-A1- 2008 239 444
- US-B1- 6 441 959
- US-B1- 7 292 786

## Description

La présente invention se rapporte au domaine de la transmission de signaux optiques et notamment de leur démultiplexage en longueur d'onde. Elle concerne plus précisément un filtre optique accordable en longueur d'onde, comprenant une source optique, un élément collimateur et convergent, un élément dispersif, un élément réflecteur mobile en rotation et un récepteur optique.

Dans l'art antérieur, les documents FR2849919-A1, US2008/239444 et US2003/007721 décrivent des filtres optiques accordables en longueur d'onde basés sur des micro-miroirs rotatifs.

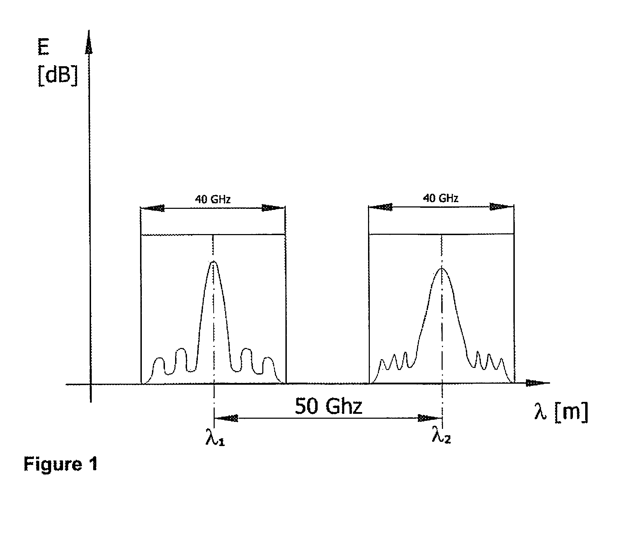

De tels filtres optiques sont bien connus de l'homme de métier. Ils sont utilisés notamment dans les systèmes de télécommunication modernes à fibres optiques. Les fibres optiques véhiculent généralement un faisceau lumineux comportant une pluralité d'ondes lumineuses, de longueurs d'onde différentes λ1, λ2, ...λn, formant les supports d'une pluralité de flux d'informations à transmettre. A cet effet, les différentes ondes lumineuses sont modulées en phase, ou en amplitude, l'information étant contenue dans la modulation. Le spectre en fréquences du faisceau lumineux est ainsi constitué d'une pluralité de bandes d'émission centrées sur des fréquences f1, f2, ... fn correspondant à des longueurs d'onde λ1, λ2, ...λn. Un exemple de ce type de signal optique est représenté schématiquement en figure 1, sous la forme d'un graphique reportant l'intensité du signal en fonction de la longueur d'onde λ. La largeur des bandes est typiquement de 40GHz, l'intervalle entre deux bandes d'émission consécutives étant de 50GHz. Dans chaque bande, le spectre en fréquences transportant un flux d'informations, est de type symétrique et occupe la totalité de la largeur de bande.

Afin d'extraire l'information contenue dans chaque onde lumineuse par transformation du signal optique en signal électrique, il est nécessaire, en sortie de fibre optique, de filtrer les différentes bandes spectrales. Cette opération est appelée le démultiplexage en longueurs d'onde.

Lors du démultiplexage en longueurs d'onde, le spectre en fréquences contenu dans chaque bande d'émission doit être restitué le plus fidèlement possible. En effet, des déformations du spectre en fréquences entraînent, par la suite, des distorsions de l'information extraite par rapport à l'information transmise. Le démultiplexage en longueur d'onde constitue donc une première étape d'une série de traitements visant à restituer l'information portée par le signal lumineux, laquelle conditionne directement la qualité de l'information délivrée au final.

L'opération de démultiplexage en longueurs d'onde est généralement réalisée à l'aide d'un filtre optique accordable en longueurs d'onde. Une description d'un tel filtre optique est donnée dans la revue 'The Optical Fiber Communication Conference and Exposition' 2003, Volume 1, page 252-253 sous le titre «Widely Tunable, Narrow Optical Bandpass Gaussian Filter Using a Silicon Microactuator" des auteurs J. Berger, F. Ilkov, D. King, A. Tselikov, D.Anthon. Il comporte essentiellement, alignés optiquement dans un plan P, une source et un récepteur optique, formés d'une première et d'une deuxième fibres optiques, un élément optique dispersif apte à séparer angulairement les longueurs d'onde du faisceau lumineux émis par la source dans le plan P, et un élément réflecteur mobile autour d'un axe AA perpendiculaire au plan P, apte, en fonction de son orientation autour de l'axe AA, à réfléchir une longueur d'onde en direction du récepteur optique. Il comprend, en outre, un élément collimateur et convergent, tel qu'une lentille, de distance focale F, et une lame quart d'onde. L'élément collimateur et convergent est situé à la distance F des première et deuxième fibres optiques, lesquelles sont disposées sensiblement symétriquement par rapport à son axe de symétrie. Les différents éléments optiques sont alignés relativement les uns aux autres.

Le principe de fonctionnement d'un tel dispositif est le suivant. Le faisceau lumineux émis par la source passe par l'élément collimateur dont il ressort parallèle. Le faisceau ainsi collimaté est dirigé sur l'élément dispersif, et en émerge avec des angles variables dans le plan P, en fonction de la longueur d'onde. Il traverse ensuite la lame quart d'onde et vient frapper l'élément réflecteur. Le faisceau est alors réfléchi en direction de l'élément dispersif, sous des angles d'incidence variables en fonction de la longueur d'onde, puis dirigé à nouveau vers l'élément collimateur. En sortie de l'élément collimateur et convergent, une seule longueur d'onde λi converge vers le récepteur optique, tandis que les autres longueurs d'onde convergent vers différents points alignés de part et d'autre du récepteur optique.

La réponse spectrale de ce type de filtre optique, qui est une combinaison de la réponse du réseau de diffraction et de l'angle d'acceptance du récepteur optique, est de type gaussienne. Ce point pose problème. En effet, les différentes bandes d'émission étant de type carrées, elles présentent des déformations après filtrage par une gaussienne. Essentiellement, les fréquences de bords de bande sont atténuées ou même coupées par la gaussienne, et par conséquent le spectre en fréquences qui contient l'information initiale est mal restitué. Il en résulte des distorsions au niveau du signal électrique final.

La présente invention a pour but d'améliorer le filtrage optique réalisé, de manière très simple, en procurant non pas une bande de filtrage de type gaussienne, mais formée du mélange d'au moins deux gaussiennes, dont les amplitudes et l'intervalle entre sommets peuvent être optimisés en vue de conférer à la réponse spectrale un profil aussi carré que possible. Plus précisément, l'invention concerne un filtre optique comprenant une source optique, émettant un faisceau lumineux comprenant une pluralité de longueurs d'onde, un récepteur optique, et, alignés optiquement entre la source et le récepteur, au moins un élément optique collimateur et convergent, un élément optique dispersif apte à séparer angulairement les longueurs d'onde, et un élément réflecteur mobile autour d'un axe AA, apte, en fonction de son orientation autour de l'axe AA, à réfléchir une longueur d'onde déterminée en direction du récepteur optique, les éléments optiques étant agencés pour que le faisceau lumineux effectue au moins un passage par l'élément dispersif avant d'atteindre le récepteur optique. Selon l'invention l'élément réflecteur comprend au moins deux faces définissant un premier et un deuxième plans se coupant suivant une droite parallèles à l'axe AA de rotation de l'élément réflecteur. Grâce à cette caractéristique du filtre optique selon l'invention, sa réponse spectrale n'est pas gaussienne, et le spectre en fréquence des bandes d'émission est restitué avec un minimum de déformation,

L'invention concerne également un élément réflecteur pour dispositif optique formé d'une plaque de silicium, comportant une face active et une face arrière. Selon l'invention, l'élément réflecteur comporte au moins une structure formée d'une couche mince d'un matériau présentant un différentiel de stress avec le silicium et disposée sur la plaque pour la plier suivant au moins une droite. Grâce à cette caractéristique, l'élément réflecteur comporte au moins deux faces non parallèles aptes à réfléchir des rayons lumineux dans au moins deux directions disctinctes.

D'autres caractéristiques et avantages de la présente invention ressortiront plus clairement de la description détaillée qui suit d'un exemple de réalisation d'un filtre optique selon l'invention, cet exemple étant donné à titre purement illustratif et non limitatif seulement, en liaison avec le dessin annexé sur lequel :
- les figures 2 et 3 sont des vues schématiques en coupe longitudinale, respectivement selon des plans (xOy) et (zOyO'y'), d'un premier mode de réalisation d'un filtre optique selon l'invention,
- les figures 4 et 5 sont des vues en coupe selon un plan (xOy), respectivement d'une première et d'une deuxième variantes d'un élément du filtre optique selon l'invention,
- la figure 6 est une vue de face dudit élément dans sa première variante,
- les figures 7 et 8 illustrent deux exemples de réponses spectrales d'un filtre optique selon l'invention, et
- la figure 9 représente une vue schématique en coupe longitudinale selon un plan (xOy) d'un deuxième mode de réalisation d'un filtre selon l'invention.

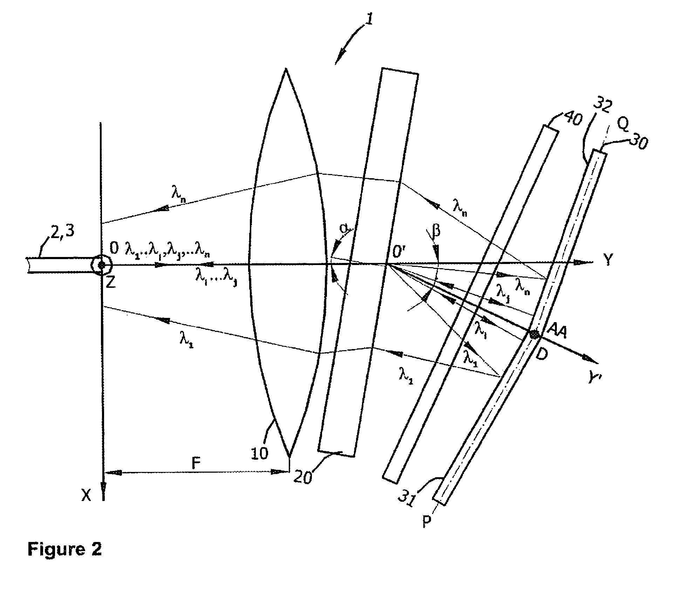

En remarque préalable à la description qui va suivre, on notera que les dimensions relatives des différents éléments n'ont pas été respectées sur les figures 2 à 6 et 9 afin de faciliter la compréhension de l'invention. Le filtre optique accordable en longueur d'onde représenté schématiquement sur ces figures, et référencé dans son ensemble 1, est positionné par rapport à un système d'axes (Oxyz) de type orthogonal. Il comporte classiquement un élément collimateur et convergent 10, tel qu'une lentille, un élément dispersif 20, tel qu'un réseau de diffraction, et un élément réflecteur 30, tel qu'un miroir. Le réseau de diffraction 20 peut être indifféremment configuré en déflexion ou en transmission. Dans le mode de réalisation décrit ci-après, on a représenté un réseau en transmission, mais l'homme de métier pourra, sans activité inventive, choisir de le remplacer par un réseau configuré en réflexion. Sa résolution dépend de la densité des structures de diffraction. On choisira typiquement une densité de 1000 lignes par millimètre, cette valeur pouvant être augmentée ou diminuée en fonction de la résolution souhaitée.

Les éléments optiques 10, 20, 30 sont alignés optiquement de manière à ce qu'un faisceau lumineux collimaté en sortie de la lentille 10, vienne frapper le réseau 20 sous un angle d'incidence α déterminé, puis soit diffracté par ledit réseau 20 dans le plan (xOy), le premier ordre étant dirigé sensiblement vers le centre du miroir 20. A cet effet, la lentille 10 est située sur l'axe Oy, à une distance F de l'origine O, correspondant à sa distance focale. Son axe de symétrie est confondu avec l'axe Oy. Le réseau 20, de structures parallèles à l'axe Oz, est situé sur l'axe Oy, à la suite de la lentille 10, son axe de symétrie faisant un angle α avec le même axe Oy. L'angle α est choisi pour optimiser l'efficacité du réseau 20. On choisira, par exemple, un angle compris entre 40° et 50° pour une longueur d'onde de 1550 nanomètres.

On note maintenant O'y' l'axe d'origine O' situé à l'intersection entre la face de sortie du réseau 20 et l'axe Oy, et faisant un angle β avec l'axe Oy. L'angle β correspond à l'angle de diffraction du premier ordre d'un faisceau venant frapper le réseau 20 sous un angle d'incidence α. Le miroir 30 est situé sur l'axe O'y', qui le coupe en son centre C. Il est mobile en rotation autour d'un axe AA parallèle à l'axe Oz et passant par son centre C, actionné par un moteur pas-à-pas, électrostatique ou électromécanique, de façon bien connue de l'homme de métier.

Le filtre optique 1 comporte, en outre, une lame quart d'onde 40, interposée entre le réseau 20 et le miroir 30, d'axe confondu avec l'axe O'y', et destinée à réduire les fluctuations de pertes optiques du filtre optique 1. En effet, il est connu que, dans la plupart des cas, les réseaux de diffraction sont sensibles à la polarisation d'un faisceau qui le traverse. Si ce faisceau présente des variations temporelles de polarisation, un changement de polarisation de 45° permet d'atténuer ces variations. Une autre solution consiste à utiliser un réseau 20 peu sensible à la polarisation du faisceau qu'il diffracte.

Le filtre optique 1 comprend encore une source optique 2 et un récepteur optique 3, tels que des fibres optiques de type monomode ou multi-mode. Les fibres optiques 2 et 3 sont alignées le long de l'axe Oz, symétriquement par rapport à l'origine O, leurs axes de symétrie étant parallèles à l'axe Oy. Elles sont situées à la distance F de la lentille 10, et à une distance L du miroir 30, choisie pour qu'un faisceau lumineux émis par la fibre optique source 2 soit réfléchi en direction de la fibre optique réceptrice 3.

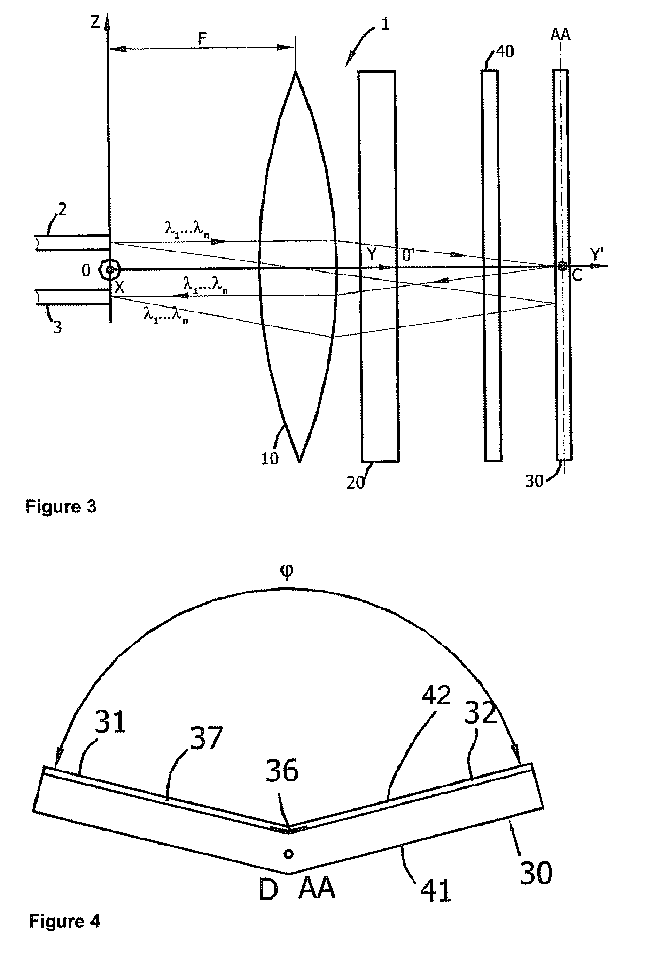

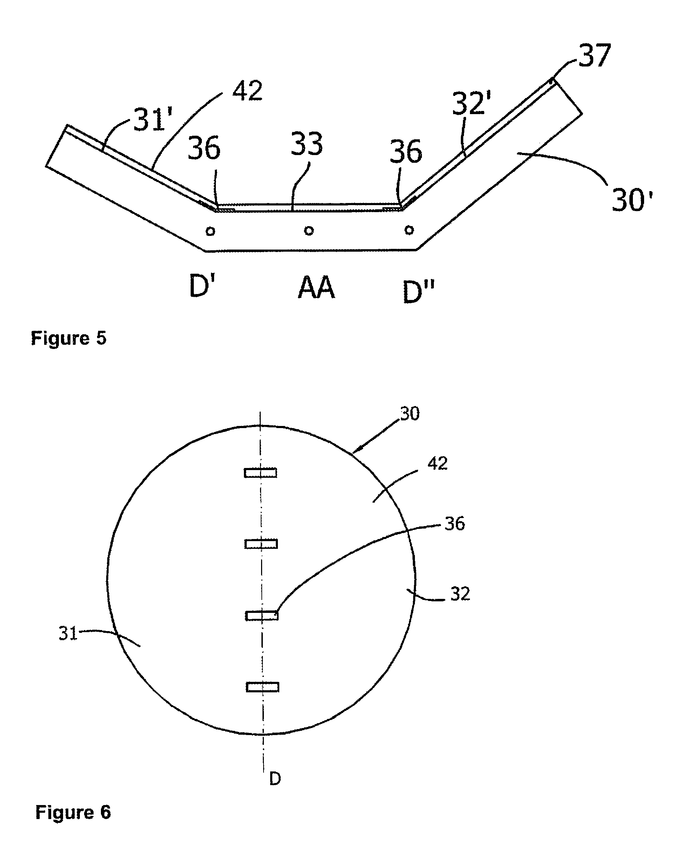

Selon l'invention, le miroir 30 comporte au moins deux faces 31 et 32, définissant deux plans P et Q, dont l'intersection définit une droite D parallèle à l'axe de rotation AA. Ledit miroir 30 est représenté selon deux variantes, respectivement en coupe, en figures 4 et 5, et de face, en figure 6. Dans la variante illustrée en figure 4, le miroir 30 comporte deux faces 31 et 32 et la droite D est confondue avec l'axe de rotation AA du miroir 30. Les deux faces 31 et 32 forment entre elles un secteur angulaire ϕ, proche de 180°, de manière à ce que chacune d'elles puisse se présenter perpendiculairement à une longueur d'onde, respectivement λ₁ et λ₂ du premier ordre de diffraction d'un faisceau incident. En pratique l'angle ϕ est compris entre 180 ° ± 0.08°, à l'exclusion de la valeur 180°. Typiquement, il vaut 180° - 0.04°. Dans la variante illustrée en figure 5, le miroir 30' présente trois faces 31', 32' et 33, définissant trois plans P', Q' et S', dont les intersections définissent deux droites, respectivement D' et D", parallèles à l'axe AA.

Le miroir 30 est formé d'une plaque de silicium comportant une face active 42 et une face arrière 41, classiquement à partir d'une plaque SOI (Silicon On Insulator), par des procédés de photolitographie bien connus de l'homme de métier. Il est de faibles dimensions, par exemple, 1 à 3 millimètres de diamètre, et 15 micromètres d'épaisseur. Il comprend une ou plusieurs structures 36 en face active 42 ou arrière 41, formées d'une couche mince d'un matériau présentant un différentiel de stress avec le silicium, et destinées à plier ladite plaque pour former au moins deux faces 31, 32. Un tel matériau est, par exemple, du nitrure ou de l'oxyde de silicium. Lesdites structures 36 sont constituées, par exemple, d'une pluralité de bandes de nitrure de silicium Si3N4, de dimension environ 50 sur 150 micromètres, alignées suivant la droite D, ou les droites D'et D", sur la face active 42 du miroir 30. Ces bandes, d'épaisseur environ 200 nanomètres, sont déposées, par un procédé physico-chimique, tel que PECVD, LPCVD ou tout autre procédé bien connu de l'homme de métier. Elles présentent un stress en tension, qui a pour effet de plier le miroir 30 le long de la droite suivant laquelle elles sont alignées, et de former ainsi deux faces 31 et 32, ou davantage. En variante, la structure 36 est formée d'une unique bande disposée suivant la droite D. Dans une autre variante, les structures 36 sont formées en oxyde de silicium SiO2, et alignées sur la face arrière du miroir 30. Dans ce cas, elles présentent un stress en compression, qui a également pour effet de plier le miroir 30, mais depuis la face arrière. Le miroir 30 peut être, ou non, recouvert d'une couche métallique réfléchissante 37 formée d'un alliage or-chrome, ou or-titane.

On va décrire maintenant le principe de fonctionnement du filtre optique 1 selon l'invention. La fibre optique source 2 émet un faisceau lumineux divergent formé d'une pluralité d'ondes lumineuses, de longueurs d'onde λ1, λ2, ...λn, modulées en phase ou en amplitude, de polarisation quelconque. Le faisceau traverse la lentille 10 dont il émerge parallèle, puis est dirigé vers le réseau 20 sous un angle d'incidence α . Le premier ordre de diffraction émerge du réseau 20 globalement sous un angle β, et traverse la lame quart d'onde 40, ce qui a pour effet de changer la polarisation du faisceau F de 45°.

Le faisceau est ensuite dirigé vers le miroir 30, qu'il vient frapper sous des angles d'incidence variables, en fonction de la longueur d'onde. Les longueurs d'onde λi et λ j perpendiculaires, respectivement, aux faces 31 et 32 du miroir 30, sont réfléchies dans la même direction vers le réseau 20, dont elles ressortent parallèles à l'axe Oy. Elles traversent ensuite la lentille 10, dont elles émergent convergentes en direction de la fibre optique réceptrice 3. L'orientation du miroir 30 autour de son axe de rotation AA détermine les longueurs d'onde λi et λj sélectionnées. Les autres longueurs d'onde λ1, λ2, ...λn non perpendiculaires aux faces 31 et 32, sont réfléchies vers le réseau 20 symétriquement par rapport à leur angle d'incidence, et en ressortent non parallèles à l'axe Oy. Elles convergent en sortie de la lentille 10, vers une pluralité de points alignés parallèlement à l'axe Ox, de part et d'autre de la fibre optique réceptrice 3.

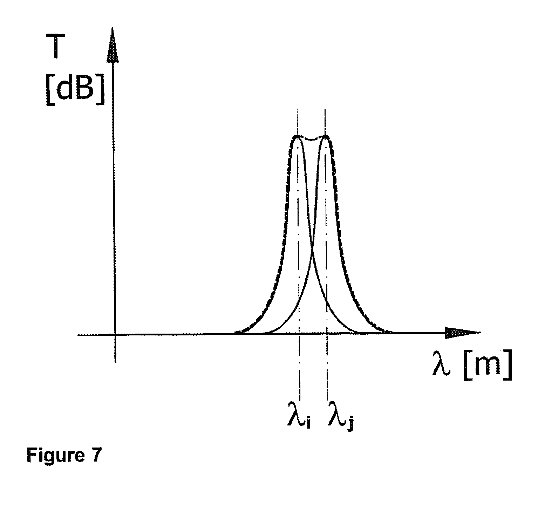

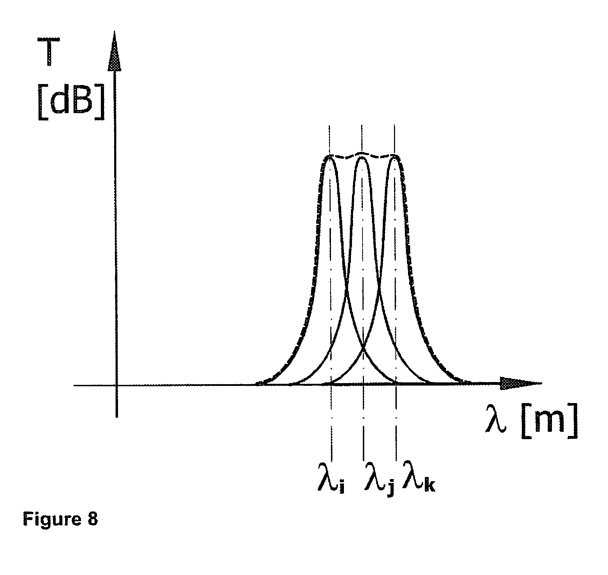

On s'intéresse maintenant aux figures 7 et 8, qui illustrent deux exemples de réponses spectrales d'un filtre selon l'invention, sous la forme de graphiques représentant la transmission T en fonction de la longueur d'onde λ. Il est connu que la réponse spectrale d'un filtre optique classique est de type gaussienne. Grâce aux deux faces 31 et 32 du miroir 30, la bande passante du filtre 1 décrit en regard des figures 2 et 3 est un mélange de deux gaussiennes centrées chacune sur les longueurs d'ondes λi et λj. Pour un réseau de diffraction 20 donné, la distance entre les longueurs d'onde λi et λj ne dépend que de l'angle ϕ entre les deux faces 31 et 32 du miroir 30. On choisira donc l'angle ϕ judicieusement, afin d'obtenir une bande passante aussi carrée que possible. Comme illustré en figure 7, la bande passante du filtre selon l'invention présente un profil sensiblement carré, dont le sommet est plus plat que celui d'une gaussienne. Un tel filtre restitue le spectre optique d'une bande d'émission en minimisant les distorsions.

La forme de la bande passante du filtre selon l'invention peut être optimisée, en variant le nombre de faces du miroir 30, leurs largeurs, et leurs angles respectifs. En figure 8, on a, par exemple, représenté une bande passante d'un filtre comportant un miroir à trois faces symétriques. La bande passante est formée de la somme de trois gaussiennes identiques, régulièrement espacées. Son profil est plus large et plus carré que le profil illustré en figure 5. En variant la largeur de la face centrale 33, on peut, indifféremment, diminuer ou augmenter la hauteur de la gaussienne centrale, selon le profil final souhaité. La variation angulaire entre les différentes faces 31', 32', 33, permet également de modifier l'espacement entre les gaussiennes, et donc d'adapter la forme de la bande spectrale. Ainsi, le filtre optique selon l'invention offre une multitude de possibilités de configurations, en fonction du filtrage souhaité. Il permet, par exemple, d'obtenir un sommet de bande passante pratiquement exempt d'ondulation.

Ainsi a été décrit un filtre optique adaptable en longueur d'onde muni d'un miroir mobile en rotation dont la géométrie permet l'optimisation du filtrage en longueurs d'ondes d'un faisceau lumineux. Bien entendu, le filtre selon l'invention ne se limite pas au mode de réalisation qui vient d'être décrit et diverses modifications et variantes simples peuvent être envisagées par l'homme du métier sans sortir du cadre de l'invention tel que défini par les revendications annexées.

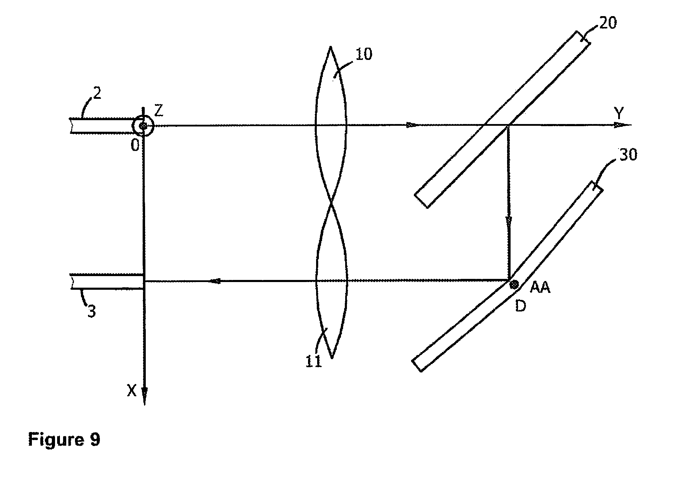

On a représenté, par exemple en figure 9, un deuxième mode de réalisation d'un filtre optique 1 selon l'invention ne présentant qu'un passage par le réseau de diffraction 20. Il diffère du filtre 1 illustré en figures 2 et 3, en ce qu'il comporte un deuxième élément collimateur et convergent 11, et en ce que le miroir 30 est aligné pour retourner le faisceau lumineux vers le récepteur optique 3, à travers ledit deuxième élément collimateur et convergent 11. La source 2 et le récepteur 3 sont alignés dans le plan xOy et non pas superposés dans le plan zOy. Le principe de fonctionnement d'un tel filtre optique est similaire à celui du filtre décrit en regard des figures 2 et 3, à la différence que le faisceau effectue un unique passage par l'élément dispersif 20.

## Revendications

1. Filtre optique accordable en longueur d'onde comprenant une source optique (2), émettant un faisceau lumineux comprenant une pluralité de longueurs d'onde, un récepteur optique (3), et, alignés optiquement entre ladite source (2) et ledit récepteur (3), au moins un élément optique collimateur et convergent (10), un élément optique dispersif (20) apte à séparer angulairement lesdites longueurs d'onde, et un élément réflecteur (30, 30') mobile autour d'un axe (AA), apte, en fonction de son orientation autour de l'axe (AA), à réfléchir une longueur d'onde déterminée en direction du récepteur optique (3), lesdits éléments optiques (10, 20, 30, 30') étant agencés pour que le faisceau lumineux effectue au moins un passage par l'élément dispersif (20) avant d'atteindre le récepteur optique (3), **caractérisé en ce que** l'élément réflecteur (30, 30') comprend au moins deux faces (31, 32, 31', 32') définissant un premier et un deuxième plans (P, Q, P', Q') se coupant suivant une droite (D, D') parallèle à l'axe (AA) de rotation dudit élément réflecteur (30, 30').

2. Filtre optique selon la revendication 1, **caractérisé en ce que** ladite droite (D) est confondue avec l'axe (AA).

3. Filtre optique selon l'une des revendications 1 et 2, **caractérisé en ce que** lesdites faces (31, 32) forment entre elles un secteur angulaire ϕ supérieur à 180° - 0.08 et inférieur à 180° + 0.08°.

4. Filtre optique selon la revendication 1, **caractérisé en ce que** ledit élément réflecteur (30, 30') comprend une troisième face (33) définissant un troisième plan (S') coupant lesdits premier et deuxième plans suivant deux droites (D', D") parallèles à l'axe (AA) de rotation dudit élément réflecteur (30, 30').

5. Filtre optique selon l'une des revendications 1 à 4, **caractérisé en ce que** lesdits éléments optiques (10, 20, 30, 30') sont agencés pour que le faisceau lumineux effectue deux passages par l'élément dispersif (20).

6. Filtre optique selon la revendication 5, **caractérisé en ce que** ladite source optique (2) et ledit récepteur optique (3) sont superposés dans un premier plan (zOy), le long d'un axe Oz, et **en ce que** ledit élément optique dispersif (20) est agencé pour séparer angulairement les longueurs d'onde dudit faisceau dans une deuxième plan (xOy), perpendiculaire au premier plan (zOy).

7. Filtre optique selon la revendication 6, **caractérisé en ce que** l'élément optique collimateur et convergent (10) est situé sur un premier axe Oy, à une distance F, correspondant à sa distance focale, de l'origine O, et **en ce que** son axe de symétrie est confondu avec l'axe Oy.

8. Filtre optique selon l'une des revendications 6 et 7, **caractérisé en ce que** ledit élément dispersif (20) est situé sur l'axe Oy, son axe de symétrie faisant un angle α avec l'axe Oy.

9. Filtre optique selon l'une des revendications 6 à 8, **caractérisé en ce que** ledit élément réflecteur (30, 30') est situé sur un axe O'y', faisant un angle β avec l'axe Oy correspondant à l'angle de dispersion du premier ordre de l'élément dispersif (20).

10. Filtre optique selon les revendications 1 à 9, **caractérisé en ce que** lesdits source et récepteur optiques (2, 3) sont des fibres optiques.

11. Elément réflecteur formé d'une plaque de silicium comportant une face active (42) et une face arrière (41), **caractérisé en ce qu'**il comporte au moins une structure (36) formée d'une couche mince d'un matériau présentant un différentiel de stress avec le silicium et disposée sur ladite plaque pour la plier suivant au moins une droite (D).

12. Elément réflecteur selon la revendication 11, **caractérisé en ce que** ladite structure (36) est disposée en face active (42), et **en ce que** ledit matériau est du nitrure de silicium.

13. Elément réflecteur selon la revendication 11, **caractérisé en ce que** ladite structure (36) est disposée en face arrière (41), et **en ce que** ledit matériau est de l'oxyde de silicium.

14. Elément réflecteur selon l'une des revendications 11 à 13, **caractérisé en ce qu'**il comporte plusieurs structures (36) formées de bandes alignées selon ladite droite (D).

15. Elément réflecteur selon l'une des revendications 11 à 13, **caractérisé en ce que en ce que** ladite structure (36) est formée d'une unique bande disposée selon ladite droite (D).

## Patentansprüche

1. Auf die Wellenlänge abstimmbarer optischer Filter, eine optische Quelle (2) umfassend, die einen Lichtstrahl aussendet, der eine Vielzahl an Wellenlängen umfasst, einen optischen Empfänger (3) und, zwischen der genannten Quelle (2) und dem genannten Empfänger (3) optisch ausgerichtet, mindestens ein optisches Kollimations- und Konvergenzelement (10), ein optisches Dispersionselement (20), das geeignet ist, die genannten Wellenlängen in Winkelrichtung zu trennen, und ein um eine Achse (AA) bewegliches Reflektorelement (30, 30'), geeignet, in Abhängigkeit von seiner Orientierung um die Achse (AA), eine bestimmte Wellenlänge in Richtung des optischen Empfängers (3) zu reflektieren, wobei die genannten optischen Elemente (10, 20, 30, 30') derart angeordnet sind, dass der Lichtstrahl mindestens einen Durchgang durch das Dispersionselement (20) ausführt, bevor er zum optischen Empfänger (3) gelangt, **dadurch gekennzeichnet, dass** das Reflektorelement (30, 30') mindestens zwei Flächen (31, 32, 31', 32') umfasst, die eine erste und eine zweite Ebene (P, Q, P', Q') definieren, die sich in einer Geraden (D, D') parallel zur Drehachse (AA) des genannten Reflektorelementes (30, 30') schneiden.

2. Optischer Filter nach Patentanspruch 1, **dadurch gekennzeichnet, dass** die genannte Gerade (D) mit der Achse (AA) zusammenfällt.

3. Optischer Filter nach einem der Patentansprüche 1 und 2, **dadurch gekennzeichnet, dass** die genannten Flächen (31, 32) einen Winkel ϕ größer als 180° - 0,08° und kleiner als 180° + 0,08° einschließen.

4. Optischer Filter nach Patentanspruch 1, **dadurch gekennzeichnet, dass** das genannte Reflektorelement (30, 30') eine dritte Fläche (33) umfasst, die eine dritte Ebene (S') definiert, die die genannte erste und die genannte zweite Ebene in zwei zur Drehachse (AA) des genannten Reflektorelementes (30, 30') parallelen Geraden (D', D") schneidet.

5. Optischer Filter nach einem der Patentansprüche 1 bis 4, **dadurch gekennzeichnet, dass** die genannten optischen Elemente (10, 20, 30, 30') derart angeordnet sind, dass der Lichtstrahl zwei Durchgänge durch das Dispersionselement (20) ausführt.

6. Optischer Filter nach Patentanspruche 5, **dadurch gekennzeichnet, dass** die genannte optische Quelle (2) und der genannte optische Empfänger (3) in einer ersten Ebene (zOy) längs einer Achse Oz übereinander angeordnet sind und dadurch, dass das genannte optische Dispersionselement (20) derart angeordnet ist, dass es die Wellenlängen des genannten Lichtstrahls in Winkelrichtung in einer zweiten, auf der ersten Ebene (zOy) senkrechten Ebene (xOy) trennt.

7. Optischer Filter nach Patentanspruch 6, **dadurch gekennzeichnet, dass** das optische Kollimations- und Konvergenzelement (10) in einem Abstand F, der seiner Brennweite entspricht, vom Ursprung O auf einer ersten Achse Oy liegt, und dass seine Symmetrieachse mit der Achse Oy zusammenfällt.

8. Optischer Filter nach einem der Patentansprüche 6 und 7, **dadurch gekennzeichnet, dass** das genannte Dispersionelement (20) auf der Achse Oy liegt, wobei seine Symmetrieachse mit der Achse Oy einen Winkel α einschließt.

9. Optischer Filter nach einem der Patentansprüche 6 bis 8, **dadurch gekennzeichnet, dass** das genannte Reflektorelement (30, 30') auf einer Achse O'y' liegt, die mit der Achse Oy einen Winkel β einschließt, der dem Dispersionswinkel der ersten Ordnung des Dispersionselementes (20) entspricht.

10. Optischer Filter nach einem der Patentansprüche 1 bis 9, **dadurch gekennzeichnet, dass** die genannte optische Quelle und der genannte optische Empfänger (2, 3) Lichtwellenleiter sind.

11. Reflektorelement, bestehend aus einer Siliziumplatte mit einer aktiven Seite (42) und einer Rückseite (41), **dadurch gekennzeichnet, dass** es mindestens eine Struktur (36), bestehend aus einer dünnen Schicht eines Materials, das mit Silizium eine Spannungsdifferenz aufweist, umfasst und auf die genannte Platte aufgetragen wurde, um sie längs mindestens einer Geraden (D) zu knicken.

12. Reflektorelemenfi nach Patentanspruch 11, **dadurch gekennzeichnet, dass** die genannte Struktur (36) auf der aktiven Seite (42) aufgetragen ist, und dadurch, dass das genannte Material Siliziumnitrid ist.

13. Reflektorelement nach Patentanspruch 11, **dadurch gekennzeichnet, dass** die genannte Struktur (36) auf der Rückseite (41) aufgetragen ist, und dadurch, dass das genannte Material Siliziumdioxid ist.

14. Reflektorelement nach einem der Patentansprüche 11 bis 13, **dadurch gekennzeichnet, dass** es mehrere Strukturen (36) aufweist, bestehend aus Streifen, die längs der genannten Geraden (D) angeordnet sind.

15. Reflektorelement nach einem der Patentansprüche 11 bis 13, **dadurch gekennzeichnet, dass** die genannte Struktur (36) aus einem einzigen Streifen besteht, der längs der genannten Geraden (D) angeordnet ist.

## Claims

1. Wavelength tunable optical filter comprising an optical source (2) that emits a light beam comprising a multitude of wavelengths, an optical receiver (3) and at least one collimating optical converging element (10) that are optically aligned between said source (2) and said receiver (3), a dispersing optical element (20) able to angularly separate said wavelengths and a reflecting element (30, 30') mobile about an axis (AA), able depending on its orientation about the axis (AA) to reflect a determined wavelength in direction of the optical receiver (3), said optical elements (10, 20, 30, 30') being arranged so that the light beam passes at least one time through the dispersing element (20) before reaching the optical receiver (3), **characterized in that** the reflecting element (30, 30') comprises at least two sides (31, 32, 31', 32') that define a first and a second plane (P, Q, P', Q') intersecting along a straight line (D, D') parallel to the rotation axis (AA) of said reflecting element (30, 30').

2. Optical filter according to claim 1, **characterized in that** said straight line (D) merges with the axis (AA).

3. Optical filter according to one of the claims 1 and 2, **characterized in that** said sides (31, 32) form with each other an angular sector Φ higher than 180° - 0,08 and lower than 180° +0,08°.

4. Optical filter according to claim 1, **characterized in that** said reflecting element (30, 30') comprises a third side (33) that defines a third plane (S') intersecting said first and second planes along two straight lines (D', D") parallel to the rotation axis (AA) of said reflecting element (30, 30').

5. Optical filter according to one of the claims 1 to 4, **characterized in that** said optical elements (10, 20, 30, 30') are arranged so that the light beam passes twice through the dispersive element (20).

6. Optical filter according to claim 5, **characterized in that** said optical source (2) and said optical receiver (3) are superimposed in a first plane (zOy) along an axis Oz and **in that** said dispersive element (20) is arranged to angularly separate the wavelengths of said beam in a second plane (xOy) perpendicular to the first plane (zOy).

7. Optical filter according to claim 6, **characterized in that** the collimating converging optical element (10) is situated on a first axis Oy at a distance F corresponding to its focal length from the origin O and **in that** its symmetry axis merges with the axis Oy.

8. Optical filter according to one of the claims 6 and 7, **characterized in that** said dispersive element (20) is situated on the axis Oy, its symmetry axis forming an angle α with the axis Oy.

9. Optical filter according to one of the claims 6 to 8, **characterized in that** said reflecting element (30, 30') is situated on an axis O'y' forming an angle β with the axis Oy corresponding to the dispersion angle of the first order of the dispersing element (20).

10. Optical filter according to the claims 1 to 9, **characterized in that** said source and optical receiver (2, 3) are optical fibres.

11. Reflecting element made of a silicon wafer comprising an active side (42) and a back side (41), **characterized in that** it comprises at least one structure (36) made of a thin layer of a material having a differential stress with silicon and placed on said wafer in order to fold it along at least one straight line (D).

12. Reflecting element according to claim 11, **characterized in that** said structure (36) is placed on the active side (42) and **in that** said material is silicon nitride.

13. Reflecting element according to claim 11, **characterized in that** said structure (36) is placed on the back side (41) and **in that** said material is silicon dioxide.

14. Reflecting element according to one of the claims 11 to 13, **characterized in that** it comprises several structures (36) made of strips aligned along said straight line (D).

15. Reflecting element according to one of the claims 11 to 13, **characterized in that** said structure (36) is made of a single strip placed along said straight line (D).
